# EUROPEAN PATENT SPECIFICATION

(11) **EP 3 009 549 B1**
(45) Date of publication and mention of the grant of the patent: **19.06.2019**
(21) Application number: 15186624.1
(22) Date of filing: 24.09.2015
(51) Int. Cl.: D03D 49/22, F16H 21/20

(54) **DRIVE-AMOUNT CHANGING MECHANISM FOR CRANK DRIVING APPARATUS**
MECHANISMUS ZUR ÄNDERUNG DES ANTRIEBSHUBS FÜR EIN KURBELANTRIEBSVORRICHTUNG
MÉCANISME DE CHANGEMENT DE MONTURE D'ENTRAÎNEMENT POUR APPAREIL D'ENTRAÎNEMENT À MANIVELLE

(30) Priority: 15.10.2014 JP 2014210415
(43) Date of publication of application: 20.04.2016
(73) Proprietor: TSUDAKOMA KOGYO KABUSHIKI KAISHA, Kanazawa-shi, Ishikawa-ken 921-8650 (JP)
(72) Inventor: YAMAGISHI, Daigo, Ishikawa-ken, 921-8650 (JP)
(74) Representative: Eisenführ Speiser

(56) References cited:
- EP-A1- 1 950 332
- US-A- 3 951 003
- US-A- 4 159 655

## Description

### BACKGROUND OF THE INVENTION

### 1. Field of the Invention

The present invention relates to a mechanism for changing an amount of drive in a crank driving apparatus.

### 2. Description of the Related Art

Publicly known crank driving apparatuses include a crank driving apparatus disclosed in Japanese Unexamined Patent Application Publication No. 2008-180289. The crank driving apparatus disclosed in Japanese Unexamined Patent Application Publication No. 2008-180289 (hereinafter referred to as an "existing apparatus") includes a first supporting member attached to a driving shaft so as to be unrotatable relative to the driving shaft, a second supporting member attached to the first supporting member so as to be unrotatable relative to the first supporting member, an eccentric shaft supported by the second supporting member, and a coupling member rotatably supported by the second supporting member via the eccentric shaft and coupled to an object that is to be driven. In the existing apparatus, the second supporting member is disposed in such a manner that the axis of the eccentric shaft is placed eccentric to the axis of the driving shaft. Thus, when the first and second supporting members are rotated by the rotation of the driving shaft, the coupling member and the object are driven to reciprocate a displacement distance (amount of drive) in an eccentric direction according to an eccentric amount (eccentric distance).

In the existing apparatus, an attachment position of the second supporting member relative to the first supporting member is adjustable (changeable) in the direction parallel to the eccentric direction. In the existing apparatus, the eccentric distance is changed by changing, in the direction parallel to the eccentric direction, the attachment position of the second supporting member relative to the first supporting member in the eccentric direction, thereby changing the amount of drive for driving a driven object.

Japanese Unexamined Patent Application Publication No. 2008-180289 discloses the following configuration in relation to the attachment position of the second supporting member relative to the first supporting member, used to determine an eccentric distance (amount of drive), and in relation to the change of the attachment position.

Either a crank hub, serving as a first supporting member, or a holder, serving as a second supporting member, includes a pair of stopper portions that stop the holder from moving in the direction parallel to the eccentric direction in which the holder is placed eccentric to the crank hub. The pair of stopper portions are spaced apart from each other in the eccentric direction. The attachment position of the holder relative to the crank hub is determined by bringing the other supporting member, the crank hub or the holder, into contact with either one of the stopper portions of the pair.

In the existing apparatus, the eccentric distance varies between the state where the other supporting member touches one of the stopper portions of the pair and the state where the other supporting member touches the other one of the stopper portions of the pair. Thus, the eccentric distance is changed by changing the position of the other supporting member between the position at which the other supporting member touches the one of the stopper portions of the pair and the position at which the other supporting member touches the other one of the stopper portions of the pair. Specifically, the existing apparatus is configured so as to be capable of determining the eccentric distance (amount of drive) from among only two options for each angular position of the crank hub.

As described above, in the existing apparatus, the eccentric distance (amount of drive) is determined by bringing the other supporting member into contact with either one of the stopper portions of the pair. In other words, the existing apparatus can change the eccentric distance (amount of drive) between only two options. Thus, in the existing apparatus, the adjustment of the amount of drive is significantly restricted within a range of the conceivable usage, whereby apparatuses in which the existing apparatus is usable are limited.

When the holder is attached to the crank hub in the existing apparatus in the state where the other supporting member is positioned at a neutral position (intermediate position), at which the other supporting member touches neither one of the stopper portions of the pair, the existing apparatus is also capable of setting an eccentric distance (amount of drive) different from the eccentric distances (amounts of drive) determined by bringing the other supporting member into contact with the stopper portions of the pair. In that case, however, an apparatus including such a crank driving apparatus may have the following problem.

For example, a case where the existing apparatus is used in an easing device for a loom is described. Since the holder is configured so as to be coupled to a tension roller, around which a warp is wound, via a coupling member such as an easing lever, the holder falls into a state of being loaded with the weights of the tension roller and the coupling member, which are heavy objects. Furthermore, in the case where a warp is wound around the tension roller, the holder falls into a state of being also loaded with the load caused by the tension of the warp.

The eccentric distance is changed by performing the following operations. Firstly, the attachment position of the holder relative to the crank hub attached to the driving shaft is determined to be the position corresponding to an intended eccentric distance by adjusting (changing) the position of the holder in the direction parallel to the eccentric direction. Then, the holder is fixed to the crank hub at the determined position. In the existing apparatus, these operations are performed while the holder is supporting the weights of the components such as the tension roller. Here, these operations can be relatively easily performed in the state where the other supporting member and the stopper portion are in contact with each other. In the case, however, where the other supporting member is in the neutral position in which the other supporting member is not in contact with the stopper portion, an operator is required to support the total weight of the components, whereby such operations put an enormous load on the operator.

In the configuration where easing devices are disposed on both sides of a tension roller (a both-side driven configuration), a change of the eccentric distance requires changes by the same distance on both sides. In the above-described configuration, however, in which an operator has to determine the attachment positions of the holders at their neutral positions while supporting the weights of the components such as the tension roller, it would be extremely difficult for a single operator to determine the positions of the holders relative to the crank hubs in such a manner that the eccentric distances on both sides accurately match with each other. Thus, this operation requires multiple operators. Even when this operation is performed by multiple operators, it is difficult to cause the eccentric distances on both sides to accurately match with each other. Thus, the amounts of drive (easing amounts) may be varied between both sides of the tension roller, whereby weaving may be adversely affected.

US 4,159,655 A discloses an adjustable eccentric assembly which is mounted on a rotatable shaft and includes a first or drive collar having an arbor extending along the shaft and a second or guide collar mounted at the end of the arbor spaced from the drive collar. The drive collars have respective guide surfaces extending parallel to the axis of rotation of the shaft and a guide track is formed in the guide collar guide surface extending perpendicularly of the axis of rotation. A hub member is supported between the guide and drive collars and engages the guide track. Adjusting means serve to shift the hub member radially relative to the rotatable shaft to adjust the eccentricity of its rotation about the shaft. A throw member habin a projecting link may be rotatably mounted on the hub member so that the eccentric rotation of the hub member imparts a reciprocating motion to the throw link. Locking means enable the adjustable eccentric assembly to be mounted in any rotational relation to the rotatable shaft so as to control the timing of the eccentric throw.

US 3,951,003 A discloses a crank mechanism for imparting reciprocal lineal movement to a member through forward and reverse strokes, and providing dwell periods for the member at each end of its stroke. The crank mechanism comprises a rotatable crank shaft for rotatably driving an eccentrically mounted crank pin which imparts reciprocal movement to a member via a connectin rod. A cam is provided for altering the throw between the axes of the crank pin and crank shaft at each end of the stroke of the member to provide dwell periods for the member in such positions.

### SUMMARY OF THE INVENTION

In view of the problems of the existing apparatus, the present invention aims to provide a drive-amount changing mechanism that facilitates, in the existing apparatus, an adjustment of an eccentric distance of a second supporting member (holder) from a first supporting member (crank hub) and positioning of the second supporting member relative to the first supporting member at a neutral position.

The present invention is applicable to a drive-amount changing mechanism of a crank driving apparatus, the mechanism including a first supporting member attached to a driving shaft so as to be unrotatable relative to the driving shaft, a second supporting member attached to the first supporting member so as to be unrotatable relative to the first supporting member, an eccentric shaft supported by the second supporting member, and a coupling member rotatably supported by the second supporting member via the eccentric shaft and coupled to an object that is to be driven. The second supporting member is disposed in such a manner that an attachment position of the second supporting member relative to the first supporting member is adjustable (changeable) in an eccentric direction in which an axis of the eccentric shaft is positioned eccentric to an axis of the driving shaft. The attachment position of the second supporting member relative to the first supporting member in the eccentric direction determines an eccentric distance of the axis of the eccentric shaft from the axis of the driving shaft. An amount of drive of the crank driving apparatus is changed by changing the eccentric distance as a result of changing the attachment position.

The drive-amount changing mechanism of a crank driving apparatus according to the invention made to achieve the above-described object includes a supporting portion disposed so as to be secured to one of the first supporting member and the second supporting member and a position-adjusting member supported by the supporting portion and disposed so as to touch a surface of the other one of the first supporting member and the second supporting member, the surface extending in a direction crossing the eccentric direction. A rotation of the position-adjusting member relative to the supporting portion changes a distance from the supporting portion to a contact position at which the position-adjusting member touches the other supporting member and changes positions of the first supporting member and the second supporting member relative to each other in the eccentric direction.

In the drive-amount changing mechanism of a crank driving apparatus according to the invention, the supporting portion is a shank member inserted into an oblong hole and disposed so as to extend parallel to the axis of the driving shaft from a contact surface of the one supporting member that touches the other supporting member, the oblong hole being formed in the other supporting member and extending in a direction parallel to the eccentric direction. The other supporting member has two contact surfaces opposing in a direction parallel to the eccentric direction across the oblong hole. The position-adjusting member is a disk-shaped member having such a diameter as to be capable of touching the two contact surfaces of the other supporting member at the same time. The position-adjusting member is rotatably supported by the supporting portion in such a manner that the supporting portion is fitted to and inserted into a portion of the position-adjusting member positioned eccentric to a center of the position-adjusting member. The position-adjusting member touches the contact surfaces of the other supporting member at two portions on an outer peripheral surface opposing in a direction parallel to the eccentric direction while being supported by the supporting portion.

According to the invention, rotating the position-adjusting member relative to a supporting portion changes the distance between the supporting portion and a contact portion of the position-adjusting member at which the position-adjusting member touches another supporting member. Thus, simply rotating the position-adjusting member relative to the supporting portion changes the distance from the supporting portion on the second supporting member to a contact portion of the first supporting member at which the first supporting member touches the position-adjusting member or the distance from the supporting portion on the first supporting member to a contact portion of the second supporting member at which the second supporting member touches the position-adjusting member, whereby the positions of the first supporting member and the second supporting member relative to each other in the eccentric direction are changed. Thus, the eccentric distance (amount of drive) can be easily changed.

Moreover, since the eccentric distance (amount of drive) is changed in accordance with the degree to which the position-adjusting member is rotated relative to the supporting portion, the eccentric distance (amount of drive) can be easily determined. Furthermore, the position of the second supporting member relative to the first supporting member supported by the driving shaft is determined by bringing the position-adjusting member, supported by the supporting portion on one supporting member, and the other supporting member into contact with each other. Thus, the position of the second supporting member relative to the first supporting member can be fixed at a neutral position without putting a load on an operator. This configuration allows a single operator to easily perform the operation of changing the amount of drive in the crank driving apparatus.

In the invention, the supporting portion is constituted by a shank member. The other supporting member has an oblong hole, into which the supporting portion (shank member) is inserted, and two contact surfaces opposing in a direction parallel to the eccentric direction across the oblong hole. The position-adjusting member is a disk-shaped member that touches the two contact surfaces of the other supporting member at two portions on the outer peripheral surface opposing in the direction parallel to the eccentric direction. The position-adjusting member is supported by the supporting portion at a position eccentric to the supporting portion. In this configuration, the distances in the eccentric direction from the supporting members to the opposing portions of the position-adjusting member change in association with the rotation of the position-adjusting member around the eccentric position at which the position-adjusting member is supported by the supporting portion. Thus, the positional relation between the supporting portion, disposed so as to be secured to one supporting member, and the two contact surfaces of the other supporting member in the eccentric direction is changed and the positions of the supporting members relative to each other in the eccentric direction are changed. In this manner, the positions of the first supporting member and the second supporting member relative to each other (the eccentric distance or the amount of drive) in the eccentric direction can be changed with a simple configuration.

In this configuration, the eccentric distance (amount of drive) is changed by rotating the supporting portion (shank member) around its axis within the rotatable range up to 180°. Thus, the operator can easily find the relation between the degree to which the position-adjusting member is rotated and the eccentric distance (amount of drive). Thus, the operator can more accurately and easily adjust the eccentric distance (amount of drive).

### BRIEF DESCRIPTION OF THE DRAWINGS

Fig. 1 is an exploded perspective view of an easing device to which an aspect of the invention is applied;
Fig. 2 is a partial cross-sectional view of a crank driving apparatus according to an embodiment of the invention when viewed in a plan;
Fig. 3 is a front view of the crank driving apparatus according to the embodiment of the invention;
Fig. 4 is a perspective view of a main portion of the crank driving apparatus according to the embodiment of the invention;
Figs. 5A and 5B are front views of a main portion of the crank driving apparatus according to the embodiment of the invention where Fig. 5A illustrates the crank driving apparatus before a position-adjusting member is rotated and Fig. 5B illustrates the crank driving apparatus after the position-adjusting member is rotated;
Fig. 6 is a perspective view of the crank driving apparatus according to the embodiment of the invention in the state where the crank driving apparatus is adjusted using a spanner;
Fig. 7 is a partial cross-sectional view of a crank driving apparatus according to a modified embodiment in which the embodiment of the invention is modified, when viewed in a plan;
Fig. 8 is a partial cross-sectional view of a crank driving apparatus according to a modified embodiment in which the embodiment of the invention is modified, when viewed in a plan;
Fig. 9 is a plan view of a crank driving apparatus which is not an embodiment of the invention; and
Fig. 10 is a partial cross-sectional view of a crank driving apparatus which is not an embodiment of the invention, when viewed in a plan.

### DESCRIPTION OF THE PREFERRED EMBODIMENTS

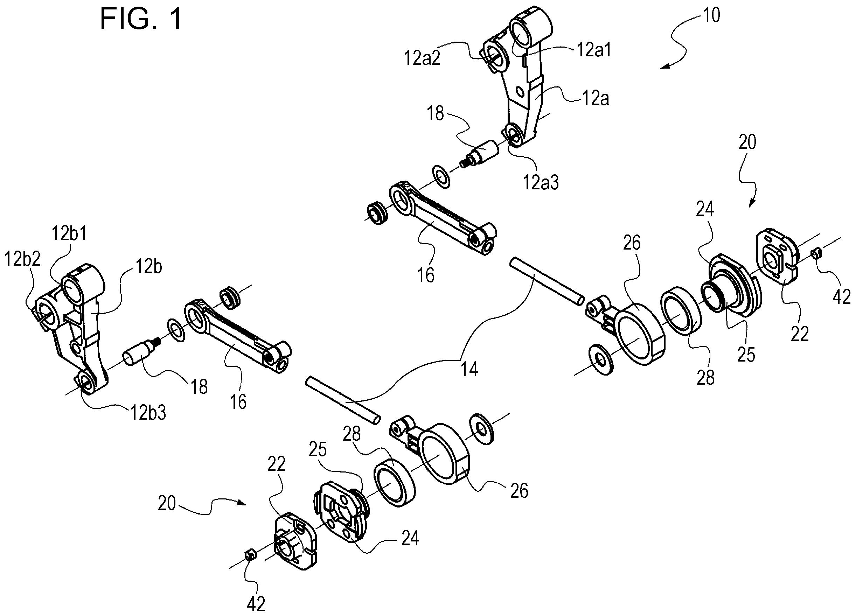

Referring to the drawings, embodiments of the invention are described in detail below. Figs. 1 to 6 illustrate a crank driving apparatus having a drive-amount changing mechanism according to an embodiment of the invention in the case where the crank driving apparatus is used for an easing device for a loom.

Fig. 1 is a schematic view of an easing device 10 for a loom to which the invention is applicable. The easing device 10 includes a pair of easing levers 12a and 12b (objects that are to be driven), a pair of crank driving apparatuses 20, and rods 14 and arms 16, used to couple the easing levers 12a and 12b and the respective crank driving apparatuses 20 together. The pair of easing levers 12a and 12b support a tension roller (not illustrated), around which a warp is wound, at both end portions of the tension roller.

The easing levers 12a and 12b are rotatably supported by a loom frame via respective support shafts (not illustrated) fitted into corresponding support holes 12a1 and 12b1 formed at their respective upper end portions. Both end shank portions of the tension roller are fitted into and fixed to support holes 12a2 and 12b2 formed at middle portions of the respective easing levers 12a and 12b. Thus, the tension roller is supported so as to be swingable around the support holes 12a1 and 12b1 relative to the loom frame via the easing levers 12a and 12b.

Shaft members 18 are fitted into and fixed to support holes 12a3 and 12b3 formed at lower end portions of the respective easing levers 12a and 12b. The arms 16 are rotatably coupled to the respective shaft members 18 via components such as bearings. Each arm 16 is coupled to the corresponding crank driving apparatus 20 via the corresponding rod 14. Specifically, the easing levers 12a and 12b that support both end portions of the tension roller are coupled to the respective crank driving apparatuses 20 via the respective shaft members 18, the respective arms 16, and the respective rods 14 so as to be driven to reciprocally swing in synchronization with each other. When both easing levers 12a and 12b are driven to reciprocally swing, the tension roller actively performs an easing operation. Here, both crank driving apparatuses 20 have the same configuration and thus only one of the apparatuses 20 is described below.

As illustrated in Fig. 1 to Fig. 3, the crank driving apparatus 20 includes a crank hub 22, serving as a first supporting member and unrotatably attached to an end portion of a driving shaft 34, a holder 24, serving as a second supporting member and attached to the crank hub 22, an eccentric shank portion 25, serving as an eccentric shaft and supported by the holder 24, and a coupling member 26 rotatably supported by the holder 24 via the eccentric shank portion 25. The driving shaft 34 is rotatably supported by a loom frame 32 via a bearing 36. The driving shaft 34 is disposed so that its one end portion protrudes from the loom frame 32. The driving shaft 34 is coupled with a main shaft (not illustrated) of the loom via a device such as a drive transfer mechanism and driven to rotate in synchronization with the main shaft.

The crank hub 22 includes a shank portion 22a, fixed to the driving shaft 34, and a plate-shaped flange portion 22b, disposed at one axial end portion of the shank portion 22a so as to extend outward in the radial direction of the shank portion 22a.

The crank hub 22 is attached to a protruding end portion of the driving shaft 34 that protrudes from the loom frame 32. Specifically, the crank hub 22 has a through hole 22c into which the driving shaft 34 is fitted. The through hole 22c is formed so as to be coaxial with the axis of the shank portion 22a. The shank portion 22a has a split clamping mechanism 22a1 having a slot continuous with the through hole 22c. The crank hub 22 is combined with the driving shaft 34 as a result of an end portion of the driving shaft 34 being fitted into the through hole 22c while the crank hub 22 is so oriented that the flange portion 22b is located closer to the loom frame 32 than the shank portion 22a and then tightly fastened to the driving shaft 34 using the split clamping mechanism 22a1, so that the crank hub 22 is attached to the driving shaft 34.

As described above, an attachment of the crank hub 22 to the driving shaft 34 is performed by tightly fastening the split clamping mechanism 22a1 included in the shank portion 22a. Thus, the crank hub 22 is attachable to the driving shaft 34 at any different angular positions. However, a portion of the driving shaft 34 to which the crank hub 22 is fixed is not limited to the end portion of the driving shaft 34. The crank hub 22 may be attached to another portion of the driving shaft 34: a different member (for example, a rotation sensor) may be attached to the end portion of the driving shaft 34 and the crank hub 22 may be attached to a portion of the driving shaft 34 closer to the loom frame 32 than the different member (for example, a rotation sensor).

The holder 24 and the eccentric shank portion 25 are integrated with each other in this embodiment. The eccentric shank portion 25 is formed so as to protrude from one end face of the plate-shaped holder 24. The eccentric shank portion 25 corresponds to an eccentric shaft according to the invention. Since the holder 24 and the eccentric shank portion 25 serving as an eccentric shaft are integrally formed in this embodiment, the eccentric shank portion 25 serving as an eccentric shaft is supported by the holder 24.

The holder 24 and the eccentric shank portion 25 have a through hole 24b, which extends throughout the holder 24 and the eccentric shank portion 25 while having its center coaxial with the axis L2 of the eccentric shank portion 25. The holder 24 and the eccentric shank portion 25 are attached to the crank hub 22 using multiple (three in the drawing) screw members 29 screwed and inserted from the side of the crank hub 22 in the following state: the holder 24 and the eccentric shank portion 25 are disposed closer to the loom frame 32 than the crank hub 22; the driving shaft 34 is inserted into the through hole 24b; and an end face of the holder 24 opposite to the surface from which the eccentric shank portion 25 protrudes touches an end face 22d of the flange portion 22b of the crank hub 22, the end face 22d being disposed closer to the loom frame 32 in the state where the crank hub 22 is attached to the driving shaft 34. The eccentric shank portion 25 is thus disposed closer to the loom frame 32 than the holder 24.

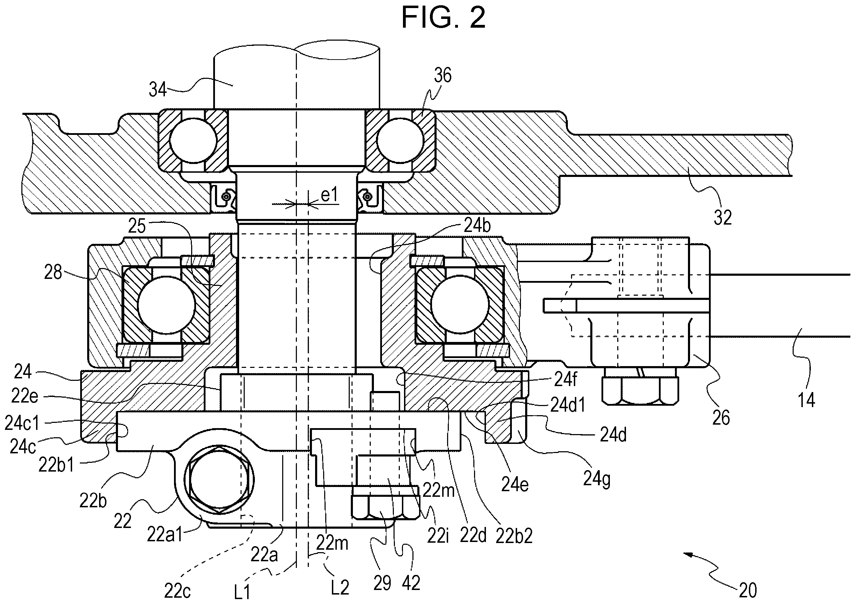

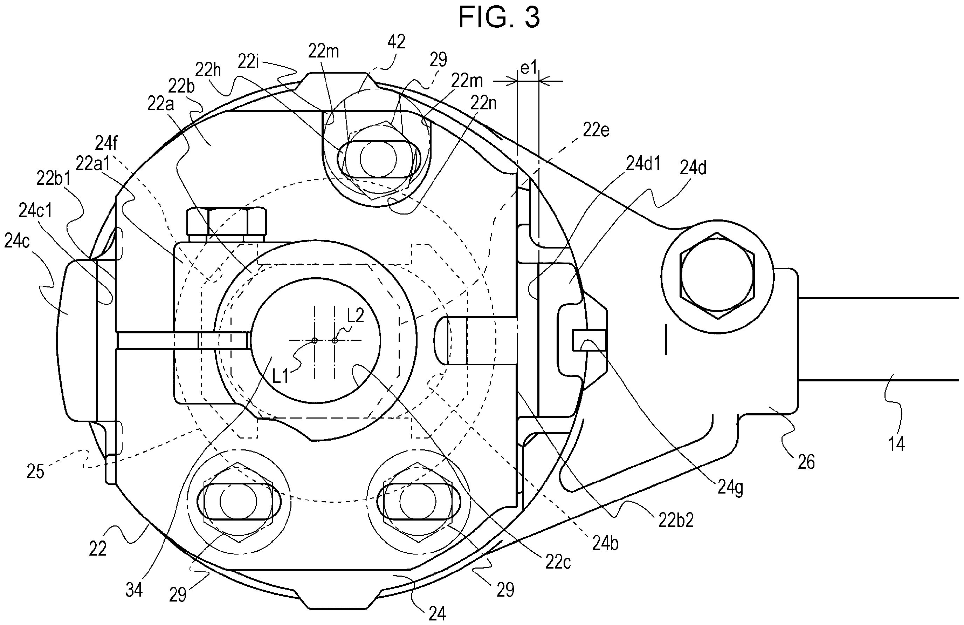

As illustrated in Fig. 3, the holder 24 has a cut 24g at a portion of the peripheral surface, the cut being used as a mark for attachment to the crank hub 22. As illustrated in Fig. 2 and Fig. 3, the through hole 24b extending through the holder 24 and the eccentric shank portion 25 has a larger dimension than the diameter of the driving shaft 34, the dimension extending in a direction (this direction is referred to as a "first direction", below) parallel to the direction of the straight line connecting the axis L2 of the eccentric shank portion 25 to the center of the cut 24g when the eccentric shank portion 25 is viewed in the axial direction. Thus, in the state where the driving shaft 34 is inserted into the through hole 24b, the holder 24 and the eccentric shank portion 25 are allowed to move in the first direction relative to the driving shaft 34.

In this configuration, the attachment position of the holder 24 relative to the crank hub 22 is adjustable (changeable) in the first direction. More specifically, the holder 24 is attached to the crank hub 22 using three screw members 29 screwed and inserted from the side of the crank hub 22, as described above. Thus, the flange portion 22b of the crank hub 22 has holes 22h that allow the screw members 29 to be inserted therethrough. The holder 24 is fixed to the crank hub 22 by tightening the screw members 29 screwed and inserted into the holder 24 in such a manner that head portions of the screw members 29 and the holder 24 tightly hold the flange portion 22b of the crank hub 22.

The holes 22h in the flange portion 22b of the crank hub 22 are formed as oblong holes extending in the first direction of the holder 24 in the state where the holder 24 is attached to the crank hub 22. Thus, when the screw members 29, in the state of being inserted into the holes 22h and tightly screwed into the holder 24, are loosened, the shank portions of the screw members 29 screwed into the holder 24 become movable in the longitudinal direction of the holes 22h inside the holes 22h, that is, the position of the holder 24 relative to the crank hub 22 becomes movable in the first direction. This configuration makes the attachment position of the holder 24 relative to the crank hub 22 adjustable (changeable) in the first direction.

The embodiment has the above-described configuration that allows the holder 24 to move relative to the crank hub 22 in the first direction so that the attachment position of the holder 24 relative to the crank hub 22 is adjustable (changeable) in the first direction. In order to guide the movement of the holder 24 in the first direction, the crank hub 22 has a guide portion 22e formed so as to protrude from the end face 22d of the flange portion 22b facing the loom frame 32. On the other hand, the holder 24 has a groove 24f formed so as to be open to an end face 24e facing away from the loom frame (specifically, the end face 24e of the holder 24 that touches the end face 22d of the flange portion 22b) and so as to receive the guide portion 22e. Thus, the guide portion 22e and the groove 24f guide the movement of the holder 24 in the first direction and prevent the holder 24 from moving in directions other than the first direction.

The guide portion 22e of the crank hub 22 is formed at such a position as to be superposed on the shank portion 22a in the axial direction and the above-described through hole 22c also extends through the guide portion 22e. Among the outer peripheral surfaces of the guide portion 22e, surfaces opposing in the direction (hereinafter referred to as a "second direction") perpendicular to the first direction when the shank portion 22a is viewed in the axial direction extend so as to be parallel to the longitudinal direction of the holes 22h (parallel to the first direction).

Two inner faces opposing in the second direction of the groove 24f of the holder 24 extend so as to be parallel to the first direction. The two inner faces are so spaced as to receive the guide portion 22e while being in slidable contact with the above-described opposing surfaces out of the outer peripheral surfaces of the guide portion 22e of the crank hub 22. The groove 24f is formed at such a position that a straight line that passes through the middle point of the groove 24f in the second direction and that is parallel to the first direction passes through the middle of the eccentric shank portion 25 in the second direction. The groove 24f is formed so that its dimension in the first direction is larger than the dimension of the guide portion 22e in the same direction (first direction) in order to allow the holder 24 to move in the first direction relative to the crank hub 22 in the state where the groove 24f is receiving the guide portion 22e of the crank hub 22.

In the configuration where the crank hub 22 has the guide portion 22e and the holder 24 has the groove 24f, the movement of the holder 24 is guided in the first direction as a result of the opposing surfaces of the guide portion 22e and the opposing inner surfaces of the groove 24f slidably touching one another while the holder 24 is being moved for adjusting (changing) the attachment position of the holder 24 relative to the crank hub 22 in the first direction.

The holder 24 also includes a pair of stopper portions 24c and 24d at positions opposing in the first direction across the crank hub 22. The stopper portions 24c and 24d are formed so as to protrude from an end face 24e, facing away from the loom frame, toward the crank hub 22.

More specifically, the stopper portions 24c and 24d are disposed on the end face 24e of the holder 24 so as to respectively face, in the first direction, end faces 22b1 and 22b2 of the crank hub 22 (flange portion 22b) opposing in the first direction. The stopper portions 24c and 24d are spaced apart further than the end faces 22b1 and 22b2 of the crank hub 22 in order to allow the holder 24 to move in the first direction relative to the crank hub 22. End faces 24c1 and 24d1 of the stopper portions 24c and 24d are parallel to the end faces 22b1 and 22b2 of the crank hub 22.

The movement of the holder 24 in the first direction relative to the crank hub 22 is thus restricted by bringing the end face 24c1 of the stopper portion 24c into contact with the end face 22b1 of the crank hub 22 or bringing the end face 24d1 of the stopper portion 24d into contact with the end face 22b2 of the crank hub 22. Thus, the stopper portions 24c and 24d limit the range of movement of the holder 24.

As described above, in the crank driving apparatus 20 having the above-described configuration, the driving shaft 34 is inserted through the through hole 24b of the eccentric shank portion 25 in the state where the holder 24 is attached to the crank hub 22. In addition, the dimension of the through hole 24b in the first direction is larger than the diameter of the driving shaft 34 so that the holder 24 is allowed to move in the first direction. Thus, the axis L2 of the eccentric shank portion 25 can be positioned eccentric to the axis L1 (or the centerline of the through hole 22c) of the driving shaft 34 (in the state illustrated in Fig. 2, the eccentric distance of the axis L2 of the eccentric shank portion 25 from the axis L1 of the driving shaft 34 is denoted by e1). The terms "eccentric direction" used below indicate the direction in which the axis L2 of the eccentric shank portion 25 is displaced from the axis L1 of the driving shaft 34 in the state where the axis L2 of the eccentric shank portion 25 is placed eccentric to the axis L1 of the driving shaft 34. Here, the first direction and the eccentric direction are parallel to each other. However, the first direction is a direction that is not fixed to a specific direction whereas the eccentric direction is fixed to the direction in which the axis L2 of the eccentric shank portion 25 is displaced from the axis L1 of the driving shaft 34.

The eccentric distance of the axis L2 of the eccentric shank portion 25 from the axis L1 (or the centerline of the through hole 22c) of the driving shaft 34 (also simply referred to as the "eccentric distance", below) is changed in the following manner. Firstly, the screw members 29 that have been tightening the crank hub 22 and the holder 24 together are loosened so that the holder 24 (second supporting member) is allowed to move (positionally adjustable) in the first direction relative to the crank hub 22 (first supporting member), attached to the driving shaft 34 so as to be unrotatable relative to the driving shaft 34. Then, the holder 24 is moved in the first direction to adjust (change) its position relative to the crank hub 22 and to be positioned at such a position at which the holder 24 has an intended eccentric distance from the crank hub 22. In the state where the holder 24 is positioned at the above position, the holder 24 is fixed to the crank hub 22 again by tightening the screw members 29, whereby the eccentric distance is changed.

The coupling member 26 is a member having an annular portion. The coupling member 26 is coupled with the easing lever 12a (or 12b) via the rod 14 or another component. The annular portion of the coupling member 26 is fitted onto the eccentric shank portion 25 with a bearing 28 interposed therebetween. The coupling member 26 is thus rotatably supported by the holder 24 with the eccentric shank portion 25 interposed therebetween. In the crank driving apparatus 20, the coupling member 26, the eccentric shank portion 25, and the holder 24 constitute a crank.

In the crank driving apparatus 20 having such a configuration, the eccentric distance determines the amount of drive of the easing lever 12a (or 12b) in the reciprocal swing driving. In addition, the angular relation between the crank hub 22 and the driving shaft 34 determines the time at which the easing lever 12a (or 12b) arrives at the swing limit at which a portion of the easing lever 12a (or 12b) is coupled with the arm 16 is located farthest from the crank driving apparatus 20, that is, the time at which the easing lever 12a (or 12b) arrives at the top dead point during the reciprocal swinging. Here, the state where the easing lever 12a (or 12b) has arrived at the top dead point is a state where a straight line connecting the axis L1 of the driving shaft 34 and the axis L2 of the eccentric shank portion 25 is aligned with a straight line connecting the axis L2 of the eccentric shank portion 25 and the connection center of the easing lever 12a (or 12b) at which the easing lever 12a (or 12b) is coupled with the arm 16. In other words, the state where the easing lever 12a (or 12b) has arrived at the top dead point is a state where the eccentric direction coincides with the direction in which the rod 14 and the arm 16 extend.

Thus, adjusting the angular relation between the driving shaft 34 and the crank hub 22 in the state where the holder 24 has been attached to the crank hub 22 can determine at which rotation angular position in one rotation of the driving shaft 34 the easing lever 12a (or 12b) that is to be driven arrives at the top dead point. Thus, in association with the operations of other devices (such as a shedding apparatus) on the loom, an intended easing operation can be performed on a tension roller by attaching the crank hub 22 to the driving shaft 34 in such a manner that the eccentric direction coincides with the direction toward the rod 14 and coincides with the direction in which the rod 14 extends while the driving shaft 34 is in a rotation angular position corresponding to the rotation angle of the loom main shaft at which the easing lever 12a (or 12b) is to arrive at the top dead point.

In the crank driving apparatus 20, the eccentric distance of the axis L2 of the eccentric shank portion 25 from the axis L1 (or the centerline of the through hole 22c) of the driving shaft 34 is changed by changing the position of the holder 24 relative to the crank hub 22 in the first direction, so that the amount of drive of the easing lever 12a (or 12b) is changed (adjusted). In this embodiment, the crank driving apparatus 20 has a minimum eccentric distance in the state where the stopper portion 24d (end face 24d1) of the holder 24 and the crank hub 22 touch each other whereas the crank driving apparatus 20 has a maximum eccentric distance in the state where the stopper portion 24c (end face 24c1) and the crank hub 22 touch each other.

The above-described crank driving apparatus 20 according to an aspect of the invention includes a drive-amount changing mechanism. The drive-amount changing mechanism includes a supporting portion, disposed so as to be secured to either one of a first supporting member (crank hub 22) and a second supporting member (holder 24), and a position-adjusting member, supported by the supporting portion and disposed so as to touch a surface of the other one of the first supporting member and the second supporting member, the surface extending in a direction crossing the eccentric direction. In the drive-amount changing mechanism according to this embodiment, the position-adjusting member is constituted by a disc-shaped member (position-adjusting member 42). The position-adjusting member is disposed between two contact surfaces (surfaces extending in a direction crossing the eccentric direction), formed in the crank hub 22 so as to face each other in the direction (first direction) parallel to the eccentric direction across one of three holes 22h of the crank hub 22. The position-adjusting member has such a diameter as to be capable of touching the two contact surfaces at the same time. In the drive-amount changing mechanism according to the embodiment, one of the three screw members 29 that is inserted into the hole 22h interposed between the two contact surfaces functions as a supporting portion. The configuration of these components is described in detail below.

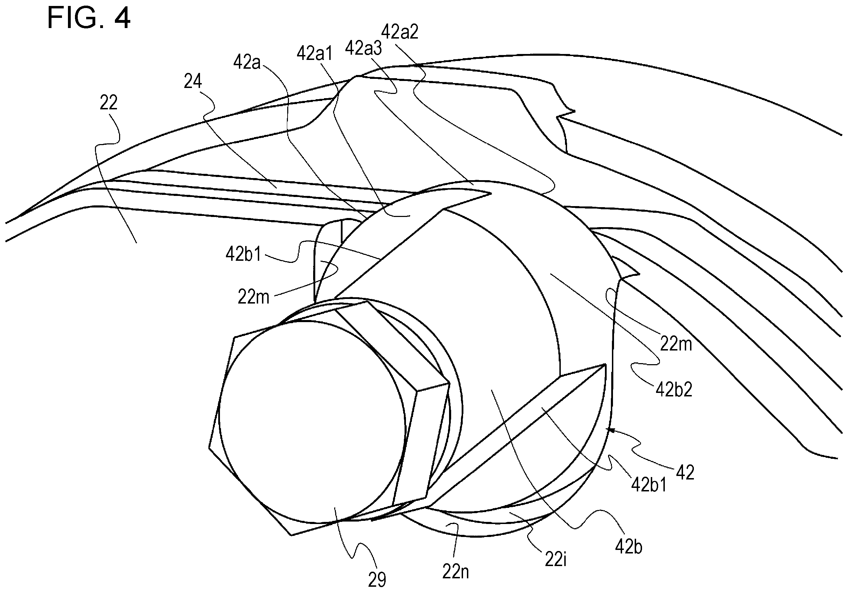

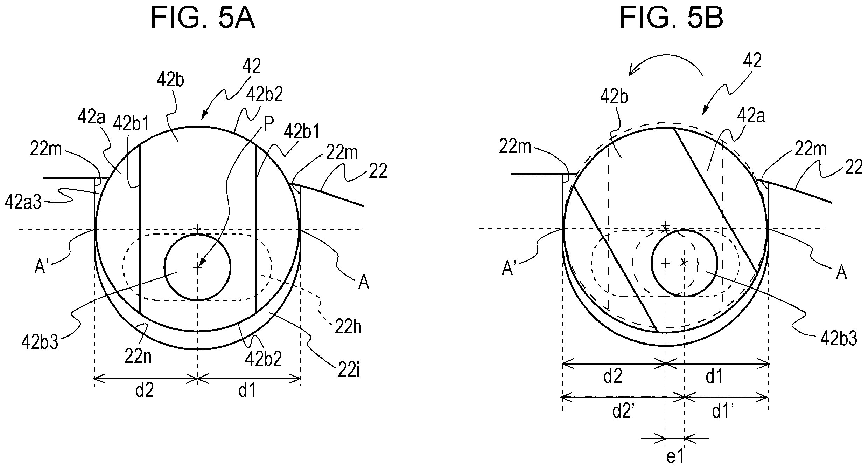

Firstly, a recessed portion 22i is formed in the crank hub 22 so as to have a hole 22h through which one of the three screw members 29 is inserted. As illustrated in Figs. 4, 5A, and 5B, the recessed portion 22i is open to the peripheral surface of the crank hub 22 (flange portion 22b) and is a closed-end groove open to the side of the crank hub 22 opposite to the loom frame side. The hole 22h is open in the bottom surface of the groove.

The recessed portion 22i thus has two inner wall surfaces 22m opposing each other in the first direction across the hole 22h. The recessed portion 22i is formed so that the distance between the two inner wall surfaces 22m in the first direction substantially coincides with the diameter of a disk-shaped position-adjusting member 42, described below. An inner wall surface 22n on the back side of the recessed portion 22i that connects the inner wall surfaces 22m together is arc-shaped and does not interfere with the position-adjusting member 42 disposed in the recessed portion 22i. The bottom surface of the recessed portion 22i is formed as a surface parallel to the end face 22d of the crank hub 22 and the end face 24e of the holder 24, which touch each other. The inner wall surfaces 22m and 22n are formed as surfaces perpendicular to the bottom surface, that is, parallel to the axial direction of the driving shaft 34.

As described above, the position-adjusting member 42 is a disk-shaped member. More specifically, as illustrated in Figs. 4, 5A, and 5B, the position-adjusting member 42 includes an integral unit of a disk-shaped base portion 42a and a handle portion 42b protruding from one surface (also referred to as a "disk surface", below) 42a1 of the base portion 42a in the thickness direction.

The base portion 42a has a diameter approximately equivalent to the distance between the two opposing inner wall surfaces 22m of the recessed portion 22i of the crank hub 22, as described above, and has a height (thickness) approximately equivalent to the depth of the recessed portion 22i. A surface (hereinafter also referred to as a "counter-disk surface") 42a2 of the base portion 42a opposite to the disk surface 42a1 is formed so as to be flat and an outer peripheral surface 42a3 of the base portion 42a is formed so as to be perpendicular to the disk surface 42a1 and the counter-disk surface 42a2.

Thus, in the state where the position-adjusting member 42 is disposed in the recessed portion 22i of the crank hub 22 (between two inner wall surfaces 22m), the position-adjusting member 42 touches the two inner wall surfaces 22m of the recessed portion 22i at the same time at two opposing portions of the outer peripheral surface 42a3 throughout the height of the base portion 42a. Thus, the two inner wall surfaces 22m of the recessed portion 22i in the crank hub 22 serve as "two contact surfaces" (which the position-adjusting member 42 touches at the same time).

The handle portion 42b has a shape obtained by cutting a disk-shaped member, shaped similarly to the base portion 42a, in a direction parallel to a diameter of the disk-shaped member at two positions equidistant from the center of the disk-shaped member. Thus, the handle portion 42b has two flat surfaces (also referred to as "handle surfaces", below) 42b1 on its outer peripheral surfaces, the two flat surfaces extending parallel to each other across the center of the disk-shaped member and having the same length. Two portions of the outer peripheral surface other than the handle surfaces 42b1 are arc surfaces 42b2 having the same curvature as the outer peripheral surface of the base portion 42a. The distance between the two arc surfaces 42b2 across the center is equal to the diameter of the base portion 42a. In this embodiment, the distance between two handle surfaces 42b1 is determined to be equal to the width of a head portion of the screw member 29, which is a hexagon head bolt (the distance between opposite sides of a regular hexagon when viewed in a plan). The handle portion 42b is integrated with the base portion 42a in such a manner that the direction of the height (thickness) of the handle portion 42b coincides with the direction of the height of the base portion 42a and the center of the handle portion 42b is coaxial with the center of the base portion 42a.

The position-adjusting member 42 has a through hole 42b3 that extends through the base portion 42a and the handle portion 42b in the height direction and perpendicularly to the disk surface 42a1 and the counter-disk surface 42a2. The center of the through hole 42b3 is positioned at the middle between the two handle surfaces 42b1 of the handle portion 42b and eccentric to the center of the base portion 42a. A screw member 29 that is to be inserted into the hole 22h in the recessed portion 22i of the crank hub 22 to attach the holder 24 to the crank hub 22 is inserted into the through hole 42b3.

The position-adjusting member 42 is disposed in such a manner that the counter-disk surface 42a2 touches the bottom surface of the recessed portion 22i of the crank hub 22 and the through hole 42b3 is positioned so as to coincide with the position of the hole 22h open to the bottom surface when viewed in the axial direction of the driving shaft 34. In this state, two opposing portions of the outer peripheral surface 42a3 of the base portion 42a touch the inner wall surfaces 22m of the recessed portion 22i of the crank hub 22. When a screw member 29 is inserted from the counter-loom-frame side of the position-adjusting member 42 into the through hole 42b3 of the position-adjusting member 42 and the hole 22h of the crank hub 22 and then screwed into the holder 24, the position-adjusting member 42 is rotatably supported by the shank portion of the screw member 29 inside the recessed portion 22i of the crank hub 22. By tightening the screw member 29, the position-adjusting member 42 and the crank hub 22 are tightly held by the head portion of the screw member 29 and the holder 24, whereby the holder 24 is attached to the crank hub 22, as described above, and the position-adjusting member 42 is prevented from rotating in the recessed portion 22i.

This screw member 29, when screwed into the holder 24, extends beyond the touching end faces 22d and 24e of the crank hub 22 and the holder 24 in the direction parallel to the axis L1 of the driving shaft 34. In this state, the screw member 29 is disposed so as to be secured to the holder 24, which is one of the supporting members, while being inserted into the crank hub 22, which is the other one of the supporting members. As described above, the screw member 29 supports the position-adjusting member 42 at its shank portion. Thus, in this embodiment, this screw member 29 (shank portion) functions as a supporting portion according to the invention. In other words, in this embodiment, the screw member 29, which is a shank member, constitutes a supporting portion.

As described above, the position-adjusting member 42 has a through hole 42b3 formed at a position eccentric to the center of the base portion 42a. When the position-adjusting member 42 is rotated around the axis of the screw member 29 (supporting portion), serving as a shank member and inserted into the through hole 42b3, the distances between the center of the shank member (screw member 29) and the contact positions at which the position-adjusting member 42 touches the two inner wall surfaces (contact surfaces) 22m of the recessed portion 22i of the crank hub 22 are changed. The amount of change of these distances depends on the distance between the center of the base portion 42a of the position-adjusting member 42 and the center of the through hole 42b3.

Referring to Figs. 5A and 5B, the operation of the drive-amount changing mechanism of the crank driving apparatus 20 according to the embodiment, whose configuration has been described above, is described now.

In the crank driving apparatus 20 of the easing device 10 according to the embodiment, the position of the holder 24 relative to the crank hub 22, fixed to the driving shaft 34, in the eccentric direction is changed (adjusted) in the following manner in order to change the easing amount of the easing device 10, which is an amount of drive. Firstly, an operator loosens the screw members 29 (three hexagon head bolts), in the state of tightly holding the crank hub 22, to allow the holder 24 to move relative to the crank hub 22.

Specifically, as described above, when the three screw members 29, in the state of tightly holding the crank hub 22, are loosened, the holder 24 becomes movable in the first direction relative to the crank hub 22 fixed to the driving shaft 34. This is because the holes 22h formed in the crank hub 22 and into which the screw members 29 are inserted are oblong holes extending in the first direction parallel to the eccentric direction. In addition, the guide portion 22e formed in the crank hub 22 and the groove 24f formed in the holder 24 guide the movement of the holder 24 in the first direction, as described above. Thus, in the movable state, the holder 24 is only movable in the first direction relative to the crank hub 22. Furthermore, loosening the screw members 29 allows the position-adjusting member 42, supported by one of the screw members 29 inserted into the hole 22h in the recessed portion 22i of the crank hub 22, to rotate in the recessed portion 22i.

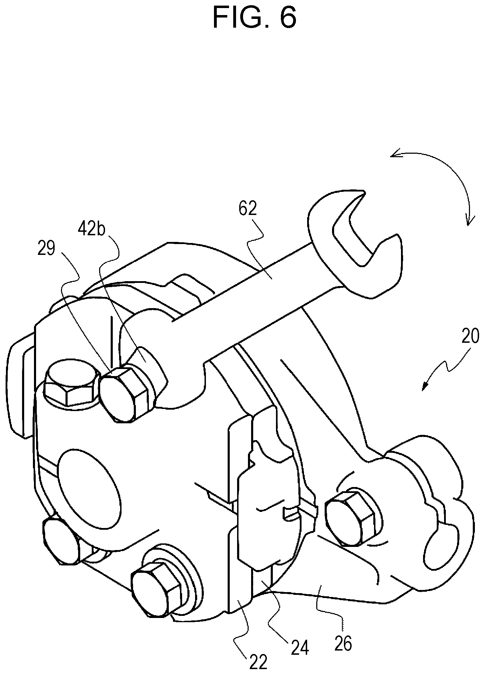

In this state, the operator rotates the position-adjusting member 42 around the screw member 29, which supports the position-adjusting member 42, in the direction corresponding to the direction of movement of the holder 24. Here, the position-adjusting member 42 is rotated by, for example, fitting a tool such as a spanner 62 on the handle portion 42b and then rotating the tool, as illustrated in Fig. 6.

By this rotating operation, the disk-shaped base portion 42a of the position-adjusting member 42 is rotated around the rotation center P (the axis of the shank member or the screw member 29, serving as a supporting portion), which is positioned eccentric to the center of the disk-shaped base portion 42a and whose position is fixed relative to the holder 24 (Fig. 5A to Fig. 5B). The position-adjusting member 42 constantly touches the inner wall surfaces (contact surfaces) 22m of the crank hub 22 at two portions on the outer peripheral surface opposing in the first direction, more specifically, at portions at which a straight line passing through the center of the base portion 42a and extending in the first direction crosses the outer peripheral surface (portions on the outer peripheral surface farthest from the center of the base portion 42a in the first direction and indicated by A and A' in Fig. 5). Thus, when the position-adjusting member 42 is rotated around the rotation center P positioned eccentric to the center of the base portion 42a in the above-described manner, the distance in the first direction from the rotation center P to each portion A or A' is changed in the position-adjusting member 42. Specifically, the opposing portions A and A' of the position-adjusting member 42 are not specific portions on the outer peripheral surface of the position-adjusting member 42 but are portions on the outer peripheral surface located farthest in the first direction from the center of the base portion 42a and determined in accordance with the state of the position-adjusting member 42 regardless of whether the position-adjusting member 42 is rotated or not. Thus, the distance from the rotation center P to each portion A or A' in the first direction varies in accordance with the rotation of the position-adjusting member 42.

The change of the above-described distance in the position-adjusting member 42 is specifically described now. As illustrated in Fig. 5, when the position-adjusting member 42 is rotated counterclockwise when viewed in a plan, the distance from the rotation center P to one portion A' in the first direction increases by a distance e1 (from d2 to d2'). At the same time, the distance from the rotation center P to the other portion A in the first direction decreases accordingly (by the distance e1) (from d1 to d1'). As a result, the distance between each inner wall surface 22m of the crank hub 22, which touches the corresponding portion A or A', and the rotation center P whose position is fixed relative to the holder 24 changes, whereby the positions of the crank hub 22 and the holder 24 relative to each other in the first direction change. Here, the crank hub 22 is fixed to the driving shaft 34 and the position of the crank hub 22 in the first direction is fixed. Thus, in accordance with the change of the relative positions, the holder 24 moves (slides) relative to the crank hub 22 in the first direction parallel to the eccentric direction.

The distance over which the holder 24 has moved in that movement is proportional to the degree to which the position-adjusting member 42 is rotated. The direction in which the holder 24 moves in that movement corresponds to the direction in which the position-adjusting member 42 is rotated. Thus, to change the eccentric distance for the purpose of changing the easing amount, the operator rotates the position-adjusting member 42 in the rotation direction appropriate for changing an eccentric distance to an intended eccentric distance from a previous eccentric distance and then stops rotating the position-adjusting member 42 at the time point at which the eccentric distance arrives at the intended eccentric distance e1. Thus, the position of the holder 24 relative to the crank hub 22 in the eccentric direction is accordingly changed by the intended eccentric distance e1. In this state, the operator tightens the screw members 29 again to fix the holder 24 to the crank hub 22 (to make the holder 24 in the unmovable state), so that changing the easing amount is complete. The eccentric distance e1 of the holder 24 from the crank hub 22 may be found by, for example, measuring, using a scale or the like, the positions of the end faces 24c1 and 24d1 of the stopper portions 24c and 24d of the holder 24 relative to the end faces 22b1 and 22b2 of the crank hub 22.

As described above, the distance over which the holder 24 moves in accordance with the rotation of the position-adjusting member 42 is determined by the distance from the center of the base portion 42a of the position-adjusting member 42 to the center of the through hole 42b3. Thus, in the position-adjusting member 42, this distance is determined so that an intended eccentric distance can be obtained and the position of the through hole 42b3 is determined on the basis of the distance.

In this manner, in the drive-amount changing mechanism according to the embodiment, merely rotating a single component, that is, the position-adjusting member 42 can move the holder 24 in a direction (first direction) or opposite to the direction (first direction), which are parallel to the eccentric direction in accordance with the rotation direction. As described above, the distance over which the holder 24 moves in that movement is proportional to the degree to which the position-adjusting member 42 is rotated. Thus, the eccentric distance e1 can be changed while the position-adjusting member 42 is gradually rotated and the distance over which the holder 24 moves is monitored. The change of the eccentric distance e1 for changing the easing amount can thus be performed with a simple structure and a simple operation in a single step.

In the drive-amount changing mechanism according to the embodiment, the opposing portions A and A' of the base portion 42a of the position-adjusting member 42, whose position in the eccentric direction is fixed to the holder 24 via the shank member (screw member 29) serving as a supporting portion, concurrently touch the opposing surfaces of the crank hub 22 (surfaces facing in opposite directions or two inner wall surfaces 22m in the recessed portion 22i). In addition to the function of adjusting (changing) the position of the holder 24 relative to the crank hub 22, the position-adjusting member 42 also has a positioning function with which the position of the holder 24 in the eccentric direction relative to the crank hub 22 is determined. Thus, the position of the holder 24 relative to the crank hub 22 can be fixed at any position within a range within which the position-adjusting member 42 can adjust the position of the holder 24, unlike in the case of the existing apparatus having a configuration where the position of the holder is fixed only when either one of the stopper portions of a pair is caused to touch the crank hub. Thus, the eccentric distance e1 can be easily changed without causing a load on an operator even when the holder 24 is loaded with the weights of components such as a tension roller.

Furthermore, in the drive-amount changing mechanism according to the embodiment, the distance between the two handle surfaces 42b1 of the handle portion 42b of the position-adjusting member 42 coincides with the width of the head portion of the screw member 29, which is a hexagon head bolt. In this configuration, in the case where rotation of the position-adjusting member 42 involves the use of a tool such as the spanner 62, the tool may be the same as the tool used to move the screw members 29, with which the holder 24 is fixed to the crank hub 22. This configuration thus achieves tool sharing.

When the position-adjusting member 42 is rotated using a tool such as the spanner 62, the position-adjusting member 42 can be easily rotated using the principle of lever even in the state where the position-adjusting member 42 and the crank hub 22 are pressed against each other as a result of being loaded with the weights of components such as the tension roller. This is because the distance from the handled portion of the tool (portion held by the operator, or the point to which a force is applied) to the supporting portion (the fulcrum on which the position-adjusting member 42 rotates, or simply fulcrum) is much larger than the distance from the supporting portion to the portion A or A' of the position-adjusting member 42 (the point of application or the portion that presses the corresponding inner wall surface 22m, or contact surface, of the crank hub 22 after the position-adjusting member 42 moves in the direction parallel to the eccentric direction in association with the rotation of the position-adjusting member 42). Thus, the position-adjusting member 42 according to the embodiment having such a configuration that allows the use of the above-described tool can further reduce the load on an operator during an operation for changing the easing amount.

The invention is not limited to the embodiment described above but may be embodied in modified examples (1) to (5) as described below.

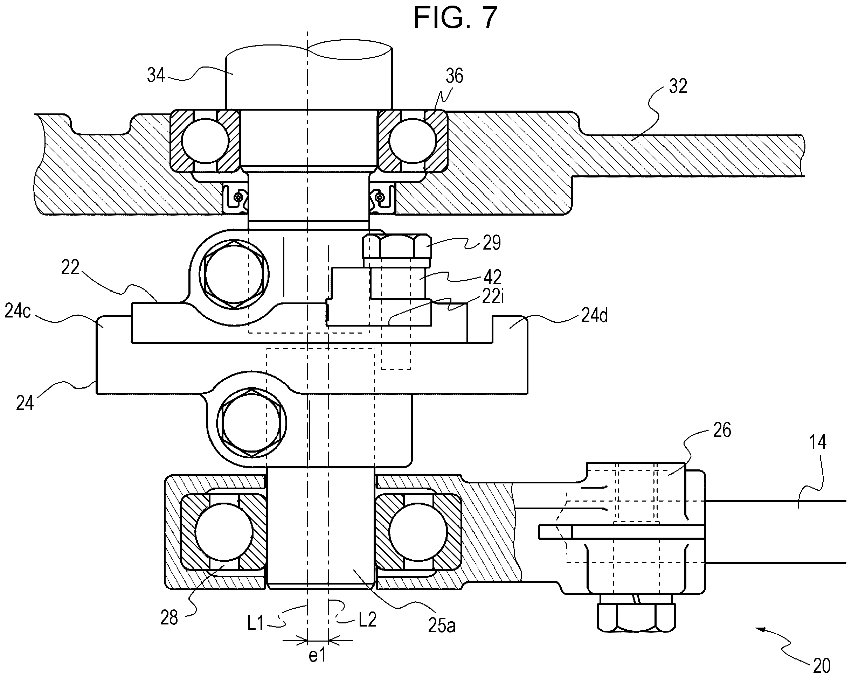

(1) According to the above-described embodiment of the invention, the crank driving apparatus 20 to which the invention is applied has a configuration in which the second supporting member (holder 24) is attached to the side of the first supporting member (crank hub 22) facing the loom frame 32. However, the crank driving apparatus 20 to which the invention is applied is not limited to this configuration. For example, as illustrated in Fig. 7, the second supporting member (holder 24) may be attached to the side of the first supporting member (crank hub 22) facing away from the loom frame.

Specifically, in the example illustrated in Fig. 7, the holder 24, serving as a second supporting member, is disposed on the opposite-to-loom frame side of the crank hub 22, serving as a first supporting member and attached to the driving shaft 34 so as to be unrotatable relative to the driving shaft 34. Here, the holder 24 is attached to the crank hub 22 while the end face of the holder 24 facing the loom frame 32 touches the end face of the crank hub 22 facing away from the loom frame.

In the configuration illustrated in Fig. 7, the position-adjusting member 42 has the same configuration as the configuration according to the above-described embodiment. The supporting portion is also similar to the one according to the above-described embodiment, constituted by a shank member (screw member 29). The position of the supporting portion is fixed relative to the holder 24 in such a form that the supporting portion protrudes from the loom-frame-side end face of the holder 24 toward the crank hub 22. The position-adjusting member 42 is disposed in the recessed portion 22i formed on the side of the crank hub 22 facing the loom frame 32. Thus, also in this example, the holder 24 serves as one supporting member and the crank hub 22 serves as the other supporting member.

In the configuration illustrated in Fig. 7, an eccentric shaft 25a and the holder 24 are separate bodies and the eccentric shaft 25a is attached to the holder 24 so as to be unrotatable relative to the holder 24. In this manner, a crank driving apparatus 20 to which the invention is applied may have a configuration in which the eccentric shaft and the second supporting member (holder 24) are integrated with each other, as in the case of the embodiment, or a configuration in which the eccentric shaft and the second supporting member are separate bodies, as in the case of the configuration illustrated in Fig. 7.

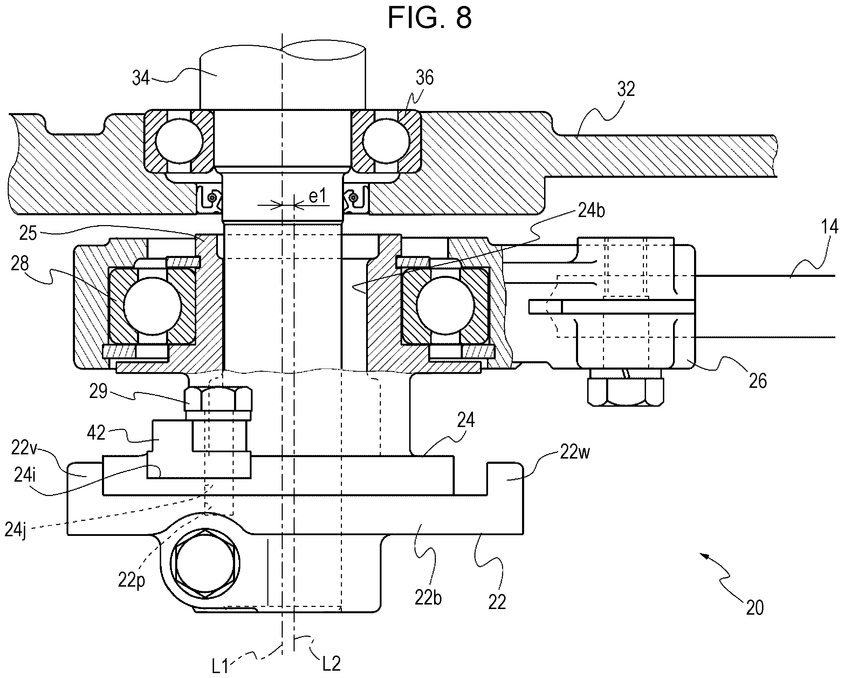

(2) In the above-described embodiment, the supporting portion (shank member or screw member 29) is disposed so as to be secured to the second supporting member (holder 24), the second supporting member (holder 24) serves as one supporting member according to the invention, and the first supporting member (crank hub 22) serves as the other supporting member according to the invention. However, the one and the other supporting members according to the invention are not limited to those according to the above-described embodiment. For example, as illustrated in Fig. 8, the supporting portion may be disposed so as to be secured to the first supporting member (crank hub 22), that is, the first supporting member or the crank hub 22 may serve as one supporting member and the second supporting member or the holder 24 may serve as the other supporting member.

Specifically, in the example illustrated in Fig. 8, the position of the holder 24, serving as a second supporting member, relative to the crank hub 22, serving as a first supporting member is the same as in the case of the above-described embodiment. In contrast to the above-described embodiment, the crank hub 22 has an internally threaded hole 22p, into which the shank member (screw member 29) that supports the crank hub 22 is screwed, and the holder 24 has a hole 24j, into which the screw member 29 is inserted. The screw member 29 is screwed into the internally threaded hole 22p of the crank hub 22 and inserted into the hole 24j of the holder 24. Thus, in this example, the shank member (screw member 29) serving as a supporting portion is disposed so as to be secured to the first supporting member (crank hub 22). Specifically, the first supporting member or the crank hub 22 serves as one supporting member and the second supporting member or the holder 24 serves as the other supporting member.

Also in the example illustrated in Fig. 8, the position-adjusting member 42 has the same configuration as that according to the embodiment and is rotatably supported by the screw member 29, which is a supporting portion. Due to the above-described arrangement of the screw member 29, however, the holder 24 has a recessed portion corresponding to a recessed portion 22i formed in the crank hub 22 in the above-described embodiment. Thus, the position-adjusting member 42 is disposed in the recessed portion 24i formed in the holder 24.

In the above-described embodiment and the examples illustrated in Figs. 7 and 8, a pair of stopper portions are disposed on either the crank hub 22 or the holder 24, serving as one supporting member. Such a pair of stopper portions, however, are not indispensable in the crank driving apparatus 20 to which the invention is applied. The supporting member may dispense with the stopper portions.

(4) In the above-described example of the drive-amount changing mechanism according to the invention, the position-adjusting member is constituted by a single disk-shaped member, the disk-shaped member (position-adjusting member 42) is rotatably supported by the shank member (screw member 29) serving as a supporting portion disposed so as to be secured to one supporting member, and the disk-shaped member touches two opposing contact surfaces (inner wall surfaces 22m) of the other supporting member at the same time. A drive-amount changing mechanism according to the invention is not limited to this configuration. For example, the drive-amount changing mechanism may have a configuration including a pair of jackscrews.

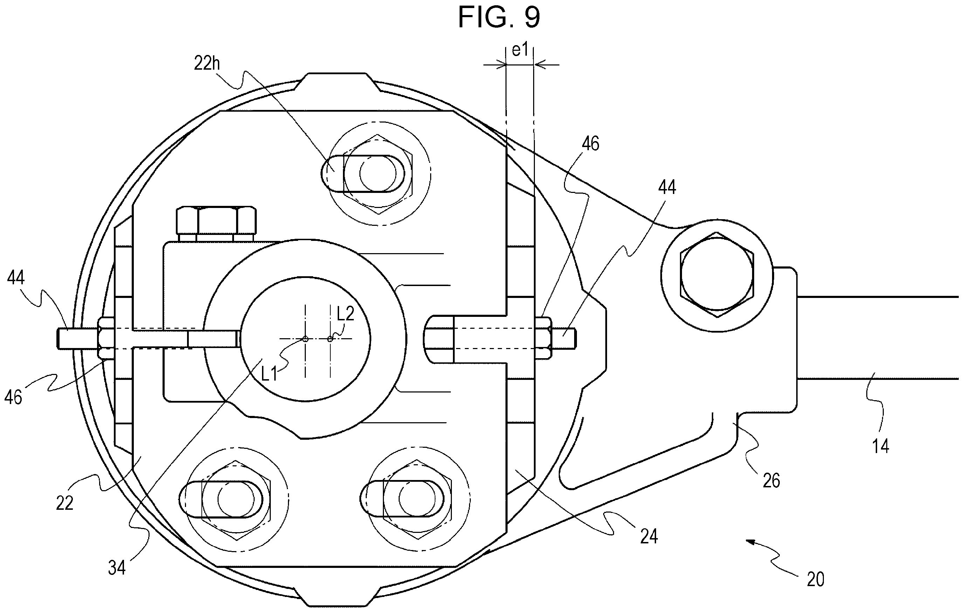

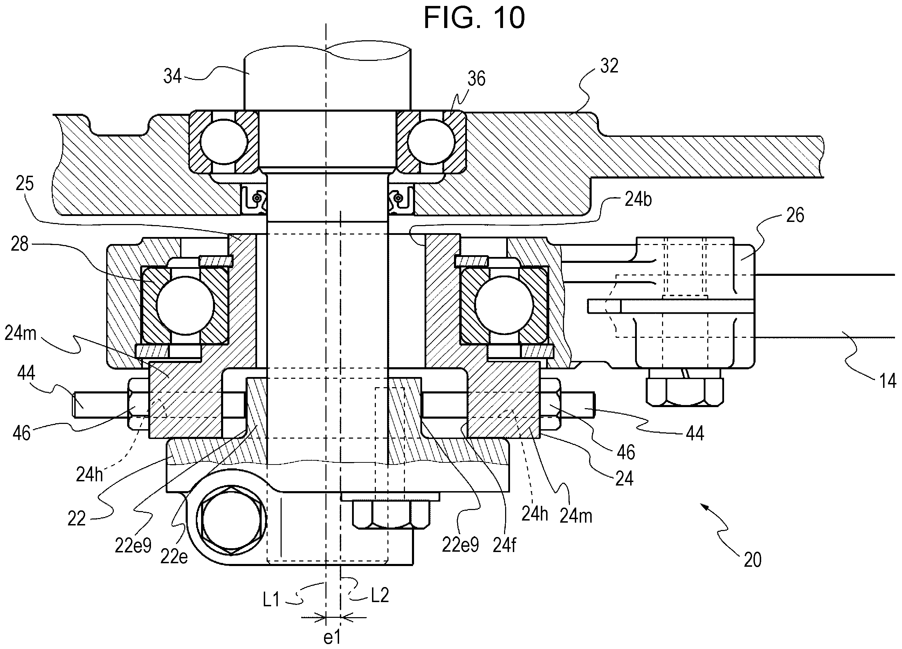

In a configuration illustrated in Figs. 9 and 10, which is not an embodiment of the invention, the holder 24 serving as a second supporting member is disposed on the side of the crank hub 22 serving as a first supporting member, the side facing the loom frame 32, and the holder 24 is attached to the crank hub 22, as in the case of the above-described embodiment. Also as in the case of the above-described embodiment, the crank hub 22 includes a guide portion 22e, which protrudes from the end face facing the loom frame 32, and the holder 24 has a groove 24f, which receives the guide portion 22e. The guide portion 22e and the groove 24f guide the relative movement between the crank hub 22 and the holder 24 in the first direction (movement of the holder 24 relative to the crank hub 22). In this configuration, a pair of jackscrews 44 are provided in such a manner as to be supported by the holder 24 on both sides of the guide portion 22e of the crank hub 22 in the eccentric direction and to tightly hold the guide portion 22e of the crank hub 22 from both sides.

More specifically, the holder 24 has two opposing internally threaded holes 24h, which are open to the groove 24f extending in the first direction at both ends of the groove 24f. Here, each internally threaded hole 24h has its centerline extending in the first direction. Each jackscrew 44 is screwed into the corresponding internally threaded hole 24h. Thus, the pair of jackscrews 44 are disposed in such a manner as to be supported by the holder 24 and to face each other across the guide portion 22e of the crank hub 22 in the first direction.

In this configuration, the ends of both jackscrews 44 touch side surfaces 22e9 of the guide portion 22e of the crank hub 22 in the first direction by tightening the jackscrews 44, that is, by rotating the jackscrews 44 around their axes to increase the proportion of the jackscrews 44 protruding into the groove 24f. Thus, the guide portion 22e is tightly held by the pair of jackscrews 44, whereby the position of the holder 24 in the eccentric direction is fixed relative to the crank hub 22. Here, the positions of the jackscrews 44 in the first direction changed by rotation are fixed using nuts 46 screwed on the jackscrews 44.

In this configuration, in the case where the holder 24 is moved relative to the crank hub 22 in the first direction, the moving is performed in the following operations 1) to 4) of the jackscrews 44.
1) Firstly, nuts 46 screwed on the jackscrews 44 are loosened to allow the jackscrews 44 to rotate, that is, to make changeable the positions of the jackscrews 44 in the first direction.
2) Secondly, in that state, one of the jackscrews 44, specifically, the jackscrew 44 disposed on the side opposite to the direction in which the holder 24 is to move is rotated in a direction in which the jackscrew 44 moves backward, that is, in such a direction in which the proportion of the jackscrew 44 protruding into the groove 24f of the holder 24 decreases. Thus, the end of the jackscrew 44 becomes separated from the side surface 22e9 of the guide portion 22e of the crank hub 22, so that the holder 24 becomes movable in the intended movement direction.
3) In this state, the other jackscrew 44 opposing the firstly moved jackscrew 44 is rotated in a direction in which the jackscrew 44 moves forward, that is, in such a direction in which the proportion of the jackscrew 44 protruding into the groove 24f of the holder 24 increases. Thus, the holder 24 moves relative to the crank hub 22 in the intended movement direction.
4) At the time point at which the eccentric distance e1 of the holder 24 from the crank hub 22 arrives at the eccentric distance corresponding to an intended easing amount, the rotation of the second jackscrew 44 is stopped and the first jackscrew 44 is rotated in the direction opposite to the above-described direction, so that the end of the first jackscrew 44 touches the side surface 22e9 of the guide portion 22e of the crank hub 22. Thus, the position of the holder 24 is fixed relative to the crank hub 22 using the jackscrews 44 at the position at which the holder 24 has a predetermined eccentric distance e1 from the crank hub 22. Then, the nuts 46 screwed on the jackscrews 44 are tightened to fix the positions of the jackscrews 44 in the first direction, whereby the position of the holder 24 relative to the crank hub 22 in the eccentric direction is fixed.
   As described above, in this configuration, the jackscrews 44, used to move the holder 24 relative to the crank hub 22, serves as a position-adjusting member and portions 24m of the holder 24, in which the internally threaded holes 24h are formed, serve as supporting portions. Thus, in this example, the holder 24 serves as one supporting member and the crank hub 22 serves as the other supporting member. Surfaces of the other supporting member extending in a direction crossing (perpendicular to) the eccentric direction are both side surfaces 22e9 of the guide portion 22e of the crank hub 22 opposing in the first direction.
(5) The configuration including the jackscrews 44 is not limited to the above-described configuration. For example, the configuration according to the embodiment may be modified in such a manner that two stopper portions 24c and 24d serve as supporting portions, the jackscrews 44 are inserted in the first direction and screwed on the stopper portions 24c and 24d, and the ends of the jackscrews 44 touch the end faces 22b1 and 22b2 of the flange portion 22b of the crank hub 22, the end faces 22b1 and 22b2 respectively facing the stopper portions 24c and 24d. In this case, as illustrated in Fig. 8, the two stopper portions (supporting portion) 22v and 22w may be formed on both end portions of the crank hub 22 and the ends of the jackscrews 44 screwed into the stopper portions may touch the end faces of the flange portion of the holder 24. Here, the crank hub 22 including the stopper portions serves as one supporting member and the holder 24 serves as the other supporting member.

## Claims

1. A crank driving apparatus (20) comprising a drive-amount changing mechanism, the mechanism including a first supporting member (22) attached to a driving shaft (34) so as to be unrotatable relative to the driving shaft (34), a second supporting member (24) attached to the first supporting member (22) so as to be unrotatable relative to the first supporting member (22), an eccentric shaft (25a) supported by the second supporting member (24), and a coupling member (26) rotatably supported by the second supporting member (24) via the eccentric shaft (25a) and coupled to an object that is to be driven,
wherein the second supporting member (24) is disposed in such a manner that an attachment position of the second supporting member (24) relative to the first supporting member (22) is adjustable in an eccentric direction in which an axis of the eccentric shaft (25a) is positioned eccentric to an axis of the driving shaft (34),
wherein the attachment position of the second supporting member (24) relative to the first supporting member (22) in the eccentric direction determines an eccentric distance of the axis of the eccentric shaft (25a) from the axis of the driving shaft (34), and
wherein an amount of drive of the crank driving apparatus (20) is changed by changing the eccentric distance as a result of changing the attachment position, the drive-amount changing mechanism comprising:
a supporting portion (29) disposed so as to be secured to one of the first supporting member (22) and the second supporting member (24); and
a position-adjusting member (42) supported by the supporting portion and disposed so as to touch a surface (22m) of the other one of the first supporting member (22) and the second supporting member (24), the surface extending in a direction crossing the eccentric direction,
wherein a rotation of the position-adjusting member (42) relative to the supporting portion changes a distance from the supporting portion to a contact position at which the position-adjusting member (42) touches the other supporting member and changes positions of the first supporting member (22) and the second supporting member (24) relative to each other in the eccentric direction,
**characterized in that** the supporting portion is a shank member (29) inserted into an oblong hole (22h) and disposed so as to extend parallel to the axis of the driving shaft (34) from a contact surface of the one supporting member that touches the other supporting member, the oblong hole (22h) being formed in the other supporting member and extending in a direction parallel to the eccentric direction,
wherein the other supporting member has two contact surfaces (22m) opposing in a direction parallel to the eccentric direction across the oblong hole (22h), and
wherein the position-adjusting member (42) is a disk-shaped member having such a diameter as to be capable of touching the two contact surfaces of the other supporting member at the same time, the position-adjusting member (42) is rotatably supported by the supporting portion in such a manner that the supporting portion is fitted to and inserted into a portion of the position-adjusting member (42) positioned eccentric to a center of the position-adjusting member (42), and the position-adjusting member (42) touches the contact surfaces of the other supporting member at two portions on an outer peripheral surface opposing in a direction parallel to the eccentric direction while being supported by the supporting portion.

## Patentansprüche

1. Kurbelantriebsvorrichtung (20), umfassend einen Mechanismus zur Änderung des Antriebsbetrags, der Mechanismus beinhaltend ein erstes Stützelement (22), das derart an einer Antriebswelle (34) befestigt ist, dass es nicht relativ zur Antriebswelle (34) drehbar ist, ein zweites Stützelement (24), das derart an dem ersten Stützelement (22) befestigt ist, dass es nicht relativ zum ersten Stützelement (22) drehbar ist, eine Exzenterwelle (25a), die von dem zweiten Stützelement (24) abgestützt wird, und ein Verbindungselement (26), das von dem zweiten Stützelement (24) über die Exzenterwelle (25a) drehbar abgestützt wird und mit einem anzutreibenden Gegenstand verbunden ist,
wobei das zweite Stützelement (24) derart angeordnet ist, dass eine Befestigungsposition des zweiten Stützelements (24) relativ zum ersten Stützelement (22) in einer exzentrischen Richtung einstellbar ist, in der eine Achse der Exzenterwelle (25a) exzentrisch zu einer Achse der Antriebswelle (34) angeordnet ist,
wobei die Befestigungsposition des zweiten Stützelements (24) relativ zum ersten Stützelement (22) in der exzentrischen Richtung einen exzentrischen Abstand der Achse der Exzenterwelle (25a) von der Achse der Antriebswelle (34) bestimmt, und
wobei ein Antriebsbetrag der Kurbelantriebsvorrichtung (20) durch Ändern des exzentrischen Abstands infolge der Änderung der Befestigungsposition geändert wird, wobei der Mechanismus zur Änderung des Antriebsbetrags Folgendes umfasst:
einen Stützabschnitt (29), der derart angeordnet ist, dass er an einem von dem ersten Stützelement (22) und dem zweiten Stützelement (24) befestigt ist; und
ein Positionseinstellelement (42), das von dem Stützabschnitt abgestützt wird und derart angeordnet ist, dass es eine Fläche (22m) des anderen von dem ersten Stützelement (22) und dem zweiten Stützelement (24) berührt, wobei sich die Fläche in einer Richtung erstreckt, die die exzentrische Richtung kreuzt,
wobei eine Drehung des Positionseinstellelements (42) relativ zum Stützabschnitt einen Abstand vom Stützabschnitt zu einer Kontaktstelle ändert, an der das Positionseinstellelement (42) das andere Stützelement berührt, und Positionen des ersten Stützelements (22) und des zweiten Stützelements (24) relativ zueinander in der exzentrischen Richtung ändert,
**dadurch gekennzeichnet, dass** der Stützabschnitt ein Schaftelement (29) ist, das in ein Langloch (22h) eingefügt und derart angeordnet ist, dass es sich parallel zur Achse der Antriebswelle (34) von einer Kontaktfläche des einen Stützelements, die das andere Stützelement berührt, erstreckt, wobei das Langloch (22h) in dem anderen Stützelement ausgebildet ist und sich in einer zur exzentrischen Richtung parallelen Richtung erstreckt,
wobei das andere Stützelement zwei Kontaktflächen (22m) aufweist, die sich in einer zur exzentrischen Richtung parallelen Richtung über das Langloch (22h) hinweg gegenüberliegen, und
wobei das Positionseinstellelement (42) ein scheibenförmiges Element mit einem derartigen Durchmesser ist, dass es die zwei Kontaktflächen des anderen Stützelements gleichzeitig berühren kann, wobei das Positionseinstellelement (42) von dem Stützabschnitt derart drehbar abgestützt wird, dass der Stützabschnitt an einen Abschnitt des Positionseinstellelements (42), der exzentrisch zu einer Mitte des Positionseinstellelements (42) angeordnet ist, angepasst und in ihn eingefügt ist, und wobei das Positionseinstellelement (42) die Kontaktflächen des anderen Stützelements an zwei Abschnitten auf einer äußeren Umfangsfläche berührt, die sich in einer zur exzentrischen Richtung parallelen Richtung gegenüberliegen, während es von dem Stützabschnitt abgestützt wird.

## Revendications

1. Appareil d'entraînement de manivelle (20) comprenant un mécanisme de modification de quantité d'entraînement, le mécanisme comprenant un premier élément de support (22) fixé à un arbre d'entraînement (34) de manière à ne pas tourner par rapport à l'arbre d'entraînement (34), un deuxième élément de support (24) fixé au premier élément de support (22) de manière à ne pas tourner par rapport au premier élément de support (22), un arbre excentrique (25a) supporté par le deuxième élément de support (24) et un élément d'accouplement (26) supporté de manière rotative par le deuxième élément de support (24) par l'intermédiaire de l'arbre excentrique (25a) et accouplé à un objet à entraîner,
le deuxième élément de support (24) étant disposé de telle sorte qu'une position de fixation du deuxième élément de support (24) par rapport au premier élément de support (22) est réglable dans une direction excentrique dans laquelle un axe de l'arbre excentrique (25a) est positionné de manière excentrique par rapport à un axe de l'arbre d'entraînement (34),
la position de fixation du deuxième élément de support (24) par rapport au premier élément de support (22) dans la direction excentrique déterminant une distance excentrique de l'axe de l'arbre excentrique (25a) par rapport à l'axe de l'arbre d'entraînement (34) et
une quantité d'entraînement de l'appareil d'entraînement de manivelle (20) étant modifiée par la modification de la distance excentrique suite à une modification de la position de fixation, le mécanisme de modification de quantité d'entraînement comprenant :
une partie de support (29) disposée de manière à être fixée à l'un parmi le premier élément de support (22) et le deuxième élément de support (24) ; et
un élément de réglage de position (42) supporté par la partie de support et disposé de façon à toucher une surface (22m) de l'autre parmi le premier élément de support (22) et du deuxième élément de support (24), la surface s'étendant dans une direction croisant la direction excentrique,
une rotation de l'élément de réglage de position (42) par rapport à la partie de support modifiant une distance de la partie de support par rapport à une position de contact au niveau de laquelle l'élément de réglage de position (42) touche l'autre élément de support et modifie les positions du premier élément de support (22) et du deuxième élément de support (24) l'un par rapport à l'autre dans la direction excentrique,
**caractérisé en ce que** la partie de support est un élément de tige (29) inséré dans un trou oblong (22h) et disposé de manière à s'étendre parallèlement à l'axe de l'arbre d'entraînement (34) à partir d'une surface de contact dudit un élément de support qui touche l'autre élément de support, le trou oblong (22h) étant formé dans l'autre élément de support et s'étendant dans une direction parallèle à la direction excentrique,
l'autre élément de support comportant deux surfaces de contact (22m) opposées dans une direction parallèle à la direction excentrique à travers le trou oblong (22h) et
l'élément de réglage de position (42) étant un élément en forme de disque ayant un diamètre tel qu'il est en mesure de toucher les deux surfaces de contact de l'autre élément de support en même temps, l'élément de réglage de position (42) étant supporté de manière rotative par la partie de support de telle sorte que la partie de support est montée sur et insérée dans une partie de l'élément de réglage de position (42) positionné de manière excentrique par rapport à un centre de l'élément de réglage de position (42) et l'élément de réglage de position (42) touchant les surfaces de contact de l'autre élément de support en deux parties sur une surface périphérique externe opposée dans une direction parallèle à la direction excentrique tout en étant supporté par la partie de support.
